# EUROPEAN PATENT SPECIFICATION

(11) **EP 0 477 854 B1**
(45) Date of publication and mention of the grant of the patent: **12.11.1997**
(21) Application number: 91116231.1
(22) Date of filing: 24.09.1991
(51) Int. Cl.: H04M 1/274

(54) **Speed dialling method for a telephone unit**
Kurzwahl-Verfahren für eine Fernsprechstelle
Méthode de numérotation abrégée pour un poste téléphonique

(30) Priority: 27.09.1990 FI 904776
(43) Date of publication of application: 01.04.1992
(60) Divisional application: 96110436.1
(73) Proprietor: NOKIA MOBILE PHONES LTD., 24101 Salo (FI)
(72) Inventor: Jokinen, Tauno, SF-90570 Oulu (FI); Väisänen, Ahti, SF-90540 Oulu (FI)
(74) Representative: Johansson, Folke Anders

(56) References cited:
- EP-A- 0 268 739
- DE-A- 2 933 477
- US-A- 4 447 676
- PATENT ABSTRACTS OF JAPAN vol. 14, no. 89 (E-891)19 February 1990 & JP-A-1 297 997
- PATENT ABSTRACTS OF JAPAN vol. 14, no. 51 (E-881)30 January 1990 & JP-A-1 276 950
- PATENT ABSTRACTS OF JAPAN vol. 13, no. 323 (E-791)21 July 1989 & JP-A-1 090 654
- PATENT ABSTRACTS OF JAPAN vol. 12, no. 310 (E-648)23 August 1988 & JP-A-63 077 250

## Description

The invention relates to a speed dialling method for a telephone unit in accordance with the preamble of claim 1. A telephone unit is here taken as meaning all telephone applications, and in particular mobile telephones and car radiophones.

Speed dialling to facilitate the use of telephones has been known since a long time, especially as the caller has to dial long or/and frequently repeated telephone numbers. For instance in usual home telephones, repetition of the digit last dialled is implemented by actuating with a particular service button.

On the other hand, the storage of speed dialling numbers in a stored register is also known, an identification code being then added to the register besides the telephone number. The speed dialling number desired by the caller is selected by means of the identification code; in certain cases, such a speed dialling is called short code dialling. This dialling is usually assisted by a particular short code dialling register, e.g. in printed form. Recently the outprint has been replaced by a telephone display, which enables to use an alphanumerical character series in addition to the identification code or instead of it, the character series facilitating the identification and dialling of the desired telephone number. Moreover, for instance in mobile telephones, particular service buttons are used for scanning the speed dialling register, whereby the register can be checked on the display one telephone number at the time. This is an advantage for the caller for instance when he is driving a car, since no special attention has to be paid to the digit or character buttons. The scanning also replaces exact memorizing of the selected speed dialling codes, in other words, it acts a "telephone diary" for the speed dialling operation. To make the speed dialling register for the telephone unit "adaptable" from the JP-A-1297997, JP-A-1276950, JP-A-1090654 it is known to take in account the caller's varying dialling needs by building up a frequency-orientated dialling register.

According to JP-A-1297997 a quick dailling number is recognized and stored in a temporary register. Furthermore the use frequency indicator of this quick dialling number is enhanced and according to the use frequency indicators the telephone informs the user about how often each stored number has been called to.

JP-A-1276950 shows a method in which an inputted number is transferred into a temporary register and possibly a name or other related information is added to said number. If the call was succesful, the number is transferred to the actual memory and the numbers in the memory are re-organized according to use frequency. If the call was unsuccesful, the dialled number is kept in the temporary register and used as the prime alternative for redialling. The result of the rearrangement is displayed.

From JP-A-1090654 it is known that with a register of limited size in case there are no free memory slots in the dialling register the phone requires the user to delete some seldomly used numbers.

Whereas from JP-A-1276950 placing the most frequently dialled numbers at "the top of the register" is known, however, the scanning may become onerous if the register is large and limited in size, and furthermore, the programming of the speed dialling operations may be difficult for the caller. Especially the problem arises that the memory available for the telephone sets a limit to the length of the register, and on the other hand, the usability of the register does no longer increase beyond a certain limit. Therefore a store location limit occurs. The invention aims at a simplification of speed dialling operations and at an enhanced service reliability in such a system.

The characteristic features of the invention are presented in claim 1.

The invention furthermore simplifies producing the register, since the register is produced automatically.

Optional embodiments of the invention are presented in the dependent claims. The invention is preferably applied to mobile telephones and particularly to telephones used in cars, where the telephone simplifies the use of the telephone and thus increases driving security.

The invention is described in further detail below with the help of one embodiment example as well as with the enclosed drawings, which show the flow chart of the programme controlling the speed dialling.

In the example, it is supposed that a display and service buttons, as well as a microprocessor with a memory to control the telephone unit operation over programmes are provided in the mobile telephone (for instance NOKIA Talkman 620). The display may be of any known type, for instance an illuminated liquid crystal display, in which alphanumerical and graphical signals relating to the use of the telephone are displayed. The service keyboard comprises, besides ordinary digital buttons, function buttons for controlling the telephone operation in a manner known per se.

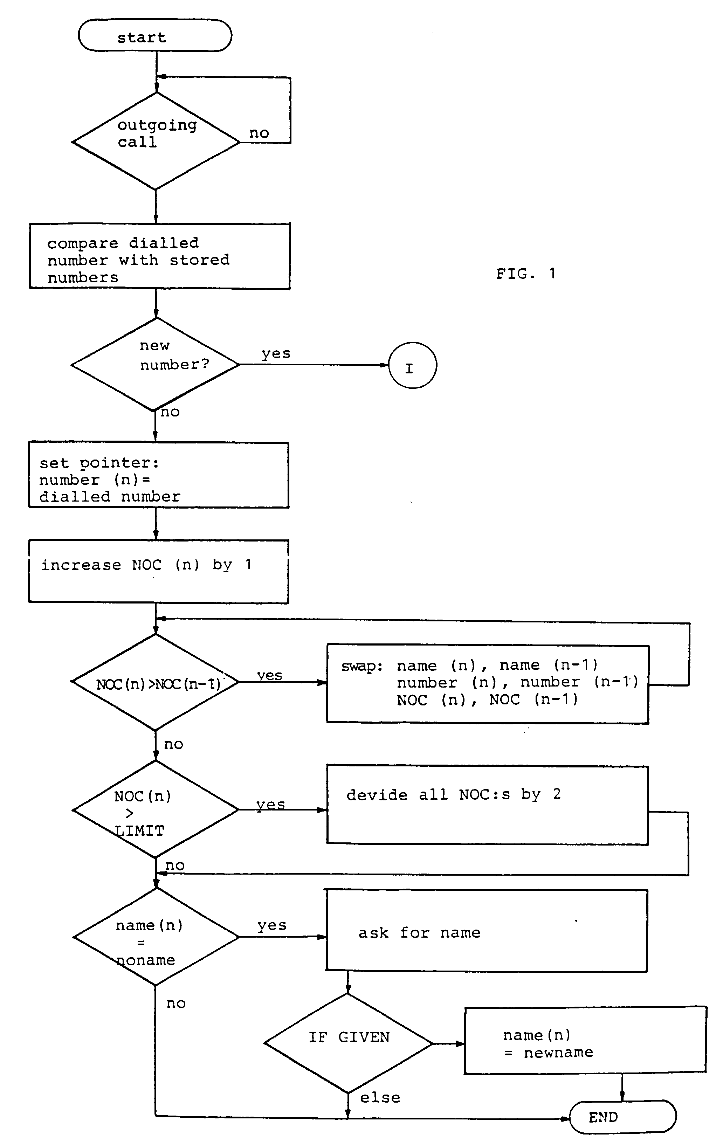

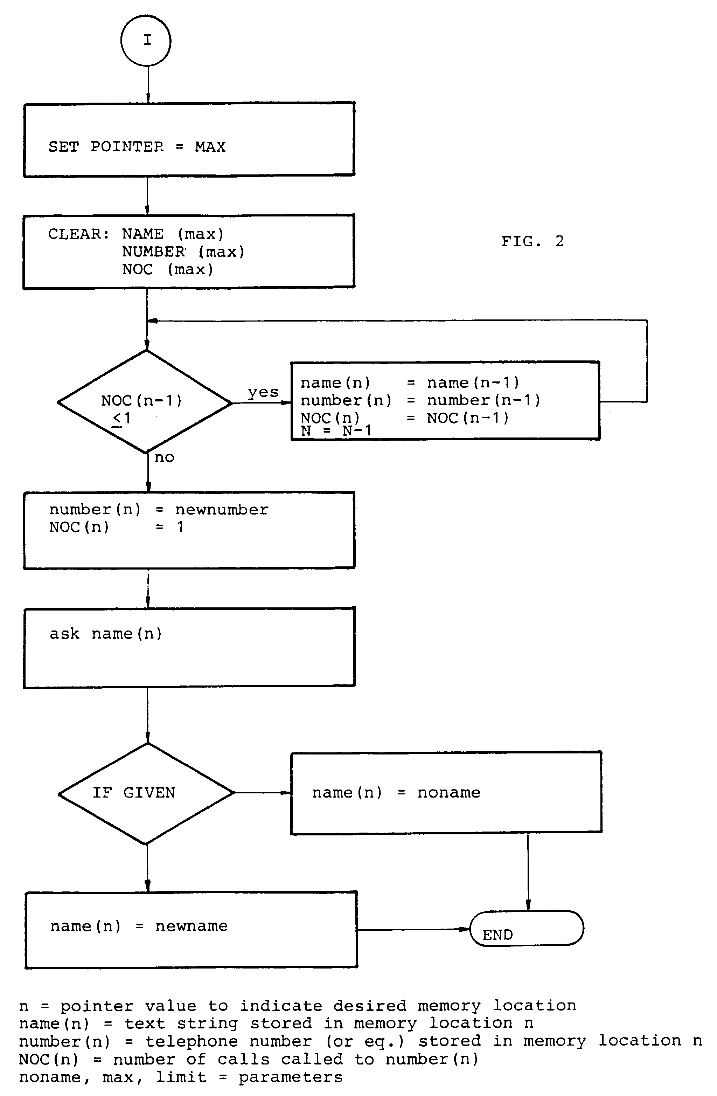

Thus, in accordance with the method of the invention, a programme segment controlling the speed dialling operation is thus added to the software of the microprocessor of the telephone (figures 1 + 2). As the caller dials a telephone number, it is read into the memory by the microprocessor for the normal call control operation, known per se. The speed dialling register is formed according to the invention by storing the telephone number in a first step (step a) in a free store location of the speed dialling register, in case the dialled number does not already exist in the register. The numerical value 1 is added to the content of the accumulator connected to the store location of the selected number each time this number is being dialled. Subsequently, in a second step (b), the microprocessor reads the content of the accumulators and puts the telephone numbers in such an order that matches the content of the accumulators in descending order, however with the precision that the number last dialled is placed higher in the register than the ones that have been called only once. The programming of this procedure can be carried out in many different ways, known per se for a person skilled in the art, so that the programme is presented here only in the form of a flow chart.

When the mobile telephone has been taken into use, a register of speed dialling numbers is formed automatically as described above, the length of the register increasing as the caller dials new telephone numbers. A battery-secured, ineffaceable memory is provided in the telephone, and the numbers are preserved in this memory also during a break in the supply voltage of the telephone, for instance during replacement or discharge of the batteries. In the determination of the size of the speed dialling memory, the longest possible number series, up to 18 digit-series including country and international codes, have been taken into account.

The memory available for the telephone sets a limit to the length of the register, and on the other hand, the usability of the register does no longer increase beyond a certain limit. This store location limit could be a number below 100, e.g. 98 locations. When the register is full, the newest telephone number is always placed higher than the ones that have been called only once, the lowest number in the register "flowing over" and being erased from the memory. The number of registered calls placed to a specific telephone number is also limited by the size of the accumulators. In this case, the programme checks the numerical values in the accumulators at each call (in step b), the content of all the accumulators being divided by a predetermined divisor, in the embodiment examples by the figure 2, if the maximum accumulator content exceeds a pre-set limit value, 50 for instance.

The speed dialling numbers are utilized in the following manner:

As the caller activates the mobile telephone in order to place a call (step c), the number last dialled appears on the display, whereby it can be redialled by a simple pressing of a service button. For reasons of secrecy, the caller may erase the dialled number from the memory by pressing a specific combination of buttons at the end of the preceding call, so that this number can no longer appear on the display. In this case, no telephone number is displayed on the display unit. In both cases, the caller may now select the number at the top of the speed dialling register to be displayed by pressing a service button (NEXT for instance). A specific amount of numbers, e.g. the five numbers latest dialled, may be stored, whereby the caller may step to the second last number etc., by pressing a button.

The beginning of the dialing step (step c) may be optionally implemented so that, instead of the number last dialled, the one at the top of the speed dialling register, i.e. the "favoured number", appears directly on the display. In the next step (c1) the caller may scan the register one number at the time by pressing the service button (NEXT), until the desired speed dialling number appears on the display. In order to speed up the scanning, the caller may skip for instance 15 numbers in the register (in step c1) by selecting 15 with the digital buttons and pressing subsequently a particular service button (RCL). The caller may repeat the operations of step c1 as many times as he wishes and vary the scanning manner as needed, until the desired speed dialling number appears on the display.

When the caller has obtained the desired telephone number on the display, he may activate the dialling (in step d), i.e. guide the telephone unit to transmit the displayed telephone number as a dialling signal to the telephone connection. In all the steps mentioned above (steps, c, c1 and d), the caller may of course dial the telephone number himself by using the digital buttons, regardless of the fact whether this desired number exists in the speed dialling register or not. After the dialling, the telephone unit stores the number last dialled and/or adds the numerical value of the connected accumulator, as well as puts the speed dialling number table in the order indicated by the accumulators (steps a and b).

The inventive method described above may naturally be varied in many ways. For instance, step b) may include statistical processing, by means of which the use of the telephone and the calling frequency of the dialled numbers may be observed. Moreover, the desired numbers may be locked in the speed dialling table, thus enabling the numbers considered important to remain at the top of the speed dialling table, even if some other number would be temporarily dialled more often. The telephone numbers may of course be arranged in some other manner, e.g. in descending order, the operation of the register being then arranged to match this.

It can also be supposed that the caller selects the desired function for step c) by means of the setting of the mobile telephone, i.e. whether the number last dialled, or the speed dialling number at the top, should be first displayed on the display unit. In step c1) it is possible to implement either forward or backward scanning by using for instance the arrow buttons of the telephone unit (+ and -). A person skilled in the art also realizes that the skipping by means of the RCL button could be replaced by scanning the speed dialling register by pressing the NEXT button, starting slowly one number at the time, and going on more rapidly, by continuously pressing down the button. Optionally, a predetermined number of steps can be skipped in the register by a rapid double pressing of the NEXT button.

Finally it is conceivable that the adaptable speed dialling register according to the invention is completed with codes, either numbers or alphanumerical character strings, inserted in the register by the caller. In this case the size of the speed dialling table has to be determined large enough to allow the addition of e.g. a 4-8-digit code at each number, besides the telephone numbers and accumulators. Thus, as the display is being scanned, it would show the telephone number together with a code, which enables a rapid identification and dialling of the desired telephone number.

The method according to the invention makes the use of speed dialling easier, since in terms of the basic conception, the caller does not need to participate in the programming of the speed dialling register; he only has to know how to use it. Furthermore, the speed dialling numbers are brought into a logical order by adaptation, this order being likely to match the dialling habits of the caller.

The method according to the invention has been described above in connection with a mobile telephone, however its application is naturally not limited to a mobile telephone, but the method can be applied to all telephone units equipped with the essential elements in view of their function and operation, as mentioned above in the preamble.

## Claims

1. A speed dialling method for a telephone unit, comprising a display unit and service buttons, as well as a programme-controlled processor unit with a storage element for the control of the operation of the telephone unit, the telephone number dialled each time by the caller being read by the processor unit of the telephone unit, the method comprises programme steps, in which:
a) the said telephone number dialled each time is stored in a free store location of the speed dialling register and/or a predetermined numerical value is accumulated in the accumulator connected with the store location of the dialled telephone number; and
b) the telephone numbers in the speed dialling memory are put into an order corresponding to the content of their respective accumulators in descending order; the method being characterized in that
c) as a new call is being placed, the first telephone number in the speed dialling memory, or the respective number last dialled during the previous call appears first on the display unit, whereby the caller is given the option of displaying the first telephone number in the said speed dialling register by pressing a particular service button, and in that when the register is full, a telephone number with a low order number in the register is automatically erased from the speed dialling memory.

2. A method according to claim 1, characterized by a further step in which by means of a service button, the caller guides the telephone unit to transmit the telephone number on the display as a dialling signal to the telephone connection, or optionally dials another telephone number by using the digital buttons.

3. A method according to claim 1, characterized in that a specific amount of numbers, e.g. the five telephone numbers last dialled are stored in the memory, and that in step c), as the number last dialled is displayed, the caller may step to the respective preceding number etc., by pressing a button.

4. A method according to one of the claim 1 to 3, characterized in that in step b), the new telephone number last dialled is placed in the speed dialling register on top of numbers that have been called only once.

5. A method according to any of the preceding claims, characterized in that the accumulator has an upper value limit and in step b) the value of the accumulator is checked and if the highest accumulator content exceeds a preset limit value an accumulator value reduction is performed.

6. A method according to claim 5, characterized in that said accumulator value reduction is performed so that the content of all the accumulators is divided by a predetermined divisor, if the highest accumulator content exceeds a pre-set limit value.

7. A method according to claim 6, characterized in that in step a), the said predetermined numerical value is 1, and in that the limit value mentioned in step b) is 50 and the said divisor is 2.

8. A method according to any of the preceding claims, characterized in that step c) also comprises step cl), in which the caller, by pressing a specific service button, may select the next number in the speed dialling register to be displayed and repeat step cl) a desired number of times.

9. A method according to claim 8, characterized in that in step cl), the caller may optionally skip a selected number of steps in the speed dialling register by pressing a specific service button.

10. The application of the method of any of the preceding claims in a mobile telephone, in particular a car radiophone.

## Patentansprüche

1. Kurzwahl-Verfahren für eine Fernsprechstelle mit einer Anzeigeeinheit und Bedientasten sowie mit einer ein Speicherelement enthaltenden programmgesteuerten Prozessoreinheit zur Betriebssteuerung der Fernsprechstelle, bei dem eine von einem Anrufer gewählte Nummer jedesmal von der Prozessoreinheit der Fernsprechstelle gelesen wird, mit folgenden Programmschritten:
a) Speicherung der jedesmal gewählten Telefonnummer auf einem freien Speicherplatz des Kurzwahlregisters und / oder Akkumulieren eines vorbestimmten nummerischen Werts in einem mit dem Speicherplatz der gewählten Telefonnummer verbundenen Akkumulator; und
b) Sortieren der im Kurzwahlregister abgelegten Telefonnummern gemäß dem Inhalt der ihnen zugewiesenen Akkumulatoren, und zwar in abnehmender Folge, **dadurch gekennzeichnet**, daß
c) bei einem neuen Anruf die erste im Kurzwahlregister abgelegte oder diejenige Telefonnummer, die zuletzt während des vorhergehenden Anrufs gewählt wurde, zuerst auf der Anzeigeeinheit erscheint, wobei derAnrufer die Möglichkeit hat, die erste Telefonnummer im Kurzwahlregister durch Drücken einer bestimmten Bedientaste anzuzeigen, und wobei automatisch eine Telefonnummer mit einer niedrigeren Rangordnung im Kurzwahlregister aus diesem gelöscht wird, wenn das Register voll ist.

2. Verfahren nach Anspruch 1, **gekennzeichnet durch** einen weiteren Schritt, in welchem der Anrufer mittels einer Bedientaste die Fernsprechstelle dazu veranlassen kann, die auf der Anzeigeeinheit angezeigte Telefonnummer als Wählsignal an den Fernsprechanschluß zu übertragen, oder aber er selbst eine andere Telefonnummer mittels der Zifferntasten wählen kann.

3. Verfahren nach Anspruch 1, **dadurch gekennzeichnet**, daß eine bestimmte Anzahl von Nummern, z.B. die letzten fünf gewählten Telefonnummern, im Register abgelegt werden, wobei der Anrufer im Schritt c), wenn die zuletzt gewählte Nummer angezeigt wird, durch Drücken einer Taste zur jeweils vorangegangenen Nummer gehen kann.

4. Verfahren nach einem der Ansprüche 1 bis 3, **dadurch gekennzeichnet**, daß im Schritt b) die neue zuletzt gewählte Telefonnummer im Kurzwahlregister an oberster Stelle der Nummern abgelegt wird, die nur einmal gewählt wurden.

5. Verfahren nach irgendeinem der vorangegangenen Ansprüche, **dadurch gekennzeichnet**, daß der Akkumulator einen oberen Grenzwert aufweist, und daß im Schritt b) der Wert des Akkumulators geprüft wird, wobei bei Überschreiten eines vorbestimmten Grenzwerts durch den größten Akkumulatorinhalt eine Reduktion des Akkumulatorwerts erfolgt.

6. Verfahren nach Anspruch 5, **dadurch gekennzeichnet**, daß zur Reduktion des Akkumulatorwerts der Inhalt aller Akkumulatoren durch einen vorbestimmten Divisor geteilt wird, falls der größte Akkumulatorinhalt einen voreingestellten Grenzwert überschreitet.

7. Verfahren nach Anspruch 6, **dadurch gekennzeichnet**, daß im Schritt a) der vorbestimmte nummerische Wert 1 und im Schritt b) der Grenzwert 50 und der Divisor 2 sind.

8. Verfahren nach irgendeinem der vorangegangenen Ansprüche, **dadurch gekennzeichnet**, daß der Schritt c) auch einen Schritt c1) enthält, bei dem der Anrufer durch Drücken einer bestimmten Bedientaste die nächste Nummer im Kurzwahlregister zur Anzeige auswählen kann, wobei der Schritt c1) beliebig oft wiederholbar ist.

9. Verfahren nach Anspruch 8, **dadurch gekennzeichnet**, daß im Schritt c1) der Anrufer wahlweise durch Drücken einer bestimmten Bedientaste eine ausgewählte Anzahl von Schritten im Kurzwahlregister überspringen kann.

10. Anwendung des Verfahrens nach irgendeinem der vorangegangenen Ansprüche in einem mobilen Telefon, insbesondere in einem Autofunktelefon.

## Revendications

1. Procédé de numérotation abrégée destiné à une unité de téléphone, comprenant une unité d'affichage et des boutons de service, de même qu'une unité de processeur commandée par programme avec un élément de mémorisation pour la commande du fonctionnement de l'unité de téléphone, le numéro de téléphone appelé chaque fois par le demandeur étant lu par l'unité de processeur de l'unité de téléphone, le procédé comprend les étapes du programme dans lesquelles :
a) ledit numéro de téléphone appelé chaque fois est mémorisé dans un emplacement de mémoire libre de la liste de numéros abrégés et/ou une valeur numérique prédéterminée est accumulée dans l'accumulateur connecté à l'emplacement de mémorisation du numéro de téléphone appelé ; et
b) les numéros de téléphone dans la mémoire de numéros abrégés sont placés dans un ordre correspondant au contenu de leurs accumulateurs respectifs dans l'ordre descendant ; le procédé étant caractérisé en ce que
c) lorsqu'un nouvel appel est effectué, le premier numéro de téléphone dans la mémoire de numéros abrégés ou le dernier numéro respectif appelé pendant l'appel précédent apparaît tout d'abord sur l'unité d'affichage, d'où il résulte que le demandeur a la faculté d'afficher le premier numéro de téléphone dans la liste de numéros abrégés en enfonçant un bouton de service particulier et en ce que, lorsque la liste est pleine, un numéro de téléphone avec un numéro d'ordre le plus bas dans la liste est automatiquement effacé de la mémoire de numéros abrégés.

2. Procédé selon la revendication 1, caractérisé par une étape supplémentaire dans laquelle au moyen d'un bouton de service, le demandeur guide l'unité de téléphone afin de transmettre le numéro de téléphone sur l'affichage comme signal de numérotation jusqu'à la connexion de téléphone ou facultativement appelle un autre numéro de téléphone en utilisant les boutons de chiffres.

3. Procédé selon la revendication 1, caractérisé en ce qu'un nombre spécifique de numéros, par exemple les cinq derniers numéros de téléphone appelés, est mémorisé dans la mémoire et en ce que dans l'étape c), lorsque le dernier numéro appelé est affiché, le demandeur peut passer au numéro respectif précédent etc. en enfonçant un bouton.

4. Procédé selon l'une quelconque des revendications 1 à 3, caractérisé en ce que dans l'étape b), le nouveau numéro de téléphone appelé en dernier est placé dans la liste de numéros abrégés au-dessus des numéros qui ont été seulement appelés une fois.

5. Procédé selon l'une quelconque des revendications précédentes, caractérisé en ce que l'accumulateur a une limite de valeur supérieure et en ce que dans l'étape b), la valeur de l'accumulateur est vérifiée et si le contenu de l'accumulateur le plus élevé dépasse une valeur limite préétablie, une réduction de la valeur de l'accumulateur est effectuée.

6. Procédé selon la revendication 5, caractérisé en ce que ladite réduction de la valeur de l'accumulateur est effectuée de sorte que le contenu de tous les accumulateurs est divisé par un diviseur prédéterminé, si le contenu de l'accumulateur le plus élevé dépasse une valeur limite préétablie.

7. Procédé selon la revendication 6, caractérisé en ce que dans l'étape a), ladite valeur numérique prédéterminée est 1, et en ce que la valeur limite mentionnée dans l'étape b) est 50 et ledit diviseur est 2.

8. Procédé selon l'une quelconque des revendications précédentes, caractérisé en ce que l'étape c) comprend également l'étape c1), dans laquelle le demandeur, en enfonçant un bouton de service spécifique, peut sélectionner le numéro suivant dans la liste de numéros abrégés qui doit être affiché et répète l'étape c1) un nombre désiré de fois.

9. Procédé selon la revendication 8, caractérisé en ce que dans l'étape c1), le demandeur peut sauter facultativement un nombre sélectionné de pas ou numéros dans la liste de numéros abrégés en enfonçant un bouton de service spécifique.

10. Application du procédé selon l'une quelconque des revendications précédentes dans un téléphone mobile, en particulier dans un radiotéléphone de voiture.
